(19) Europäisches Patentamt
European Patent Office
Office européen des brevets

(11) EP 3 998 584 A2

(12) EUROPEAN PATENT APPLICATION

(43) Date of publication:
18.05.2022 Bulletin 2022/20

(21) Application number: 22159517.6

(22) Date of filing: 01.03.2022

(51) International Patent Classification (IPC):
G06V 10/82 (2022.01)     G06V 30/226 (2022.01)
G06V 30/28 (2022.01)

(52) Cooperative Patent Classification (CPC):
G06V 10/82; G06V 30/2268; G06V 30/287

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.04.2021 CN 202110487991

(71) Applicant: BEIJING BAIDU NETCOM SCIENCE
TECHNOLOGY CO., LTD.
No.10 Shangdi 10th Street
Haidian District
Beijing 100085 (CN)

(72) Inventors:
• LIU, Jiaming
Beijing, 100085 (CN)
• HONG, Zhibin
Beijing, 100085 (CN)
• TANG, Licheng
Beijing, 100085 (CN)

(74) Representative: Carpmaels & Ransford LLP
One Southampton Row
London WC1B 5HA (GB)

(54) METHOD AND APPARATUS FOR TRAINING ADVERSARIAL NETWORK MODEL, METHOD AND APPARATUS FOR BUILDING CHARACTER LIBRARY, AND DEVICE

(57) The present disclosure discloses a method for training an adversarial network model, which relates to a field of artificial intelligence, in particular to a field of computer vision and deep learning technologies, and is applicable in a scene of image processing and image recognition. The adversarial network model includes a generation model and a discrimination model. The method for training an adversarial network model includes: generating a new character by using the generation model based on a stroke character sample having a writing feature and a line and a line character sample having a line; discriminating a reality of the generated new character by using the discrimination model; calculating a basic loss based on the new character generated by the generation model and a discrimination result from the discrimination model; calculating a track consistency loss based on a track consistency between the line of the line character sample and the line of the new character; and adjusting a parameter of the generation model according to the basic loss and the track consistency loss. The present disclosure further discloses an apparatus for training an adversarial network model, a method and an apparatus for building a character library, an electronic device and a storage medium.

200

A new character is generated by using a generation model based on a stroke character sample having a writing feature and a line and a line character sample having a line — S210

A reality of the generated new character is discriminated by using a discrimination model — S220

A basic loss is calculated based on the new character generated by the generation model and a discrimination result from the discrimination model — S230

A track consistency loss is calculated based on a track consistency between the line of the line character sample and the line of the new character — S240

A parameter of the generation model is adjusted according to the basic loss and the track consistency loss — S250

FIG. 2

**Description**

TECHNICAL FIELD

The present disclosure relates to a field of artificial intelligence, in particular to a field of computer vision and deep learning technologies, which is applicable in a scene of image processing and image recognition scene, and specifically to a method and an apparatus for training an adversarial network model, a method and an apparatus for building a character library, an electronic device and a storage medium.

BACKGROUND

With the advancement of deep learning technology, adversarial networks have been widely used in image processing. Usually, an image processing based on the adversarial network is applied to color images having complex content, such as photos, albums, etc., but cannot achieve an efficient and accurate processing for character images.

SUMMARY

The present disclosure provides a method and an apparatus for training an adversarial network model, a device and a storage medium.

According to an aspect, a method for training an adversarial network model is provided, the adversarial network model includes a generation model and a discrimination model, and the method includes: generating a new character by using the generation model based on a stroke character sample having a writing feature and a line and a line character sample having a line; discriminating a reality of the generated new character by using the discrimination model; calculating a basic loss based on the new character generated by the generation model and a discrimination result from the discrimination model; calculating a track consistency loss based on a track consistency between the line of the line character sample and the line of the new character; and adjusting a parameter of the generation model according to the basic loss and the track consistency loss.

According to another aspect, a method for building a character library is provided, and the method includes: generating a style character by using an adversarial network model based on a stroke character having a writing feature and a line and a line character having a line, wherein the adversarial network model is trained according to the above-mentioned method; and building a character library based on the generated style character.

According to another aspect, an apparatus for training an adversarial network model is provided, the adversarial network model includes a generation model and a discrimination model, and the apparatus includes: a generation module configured to generate a new character by using the generation model based on a stroke character sample having a writing feature and a line and a line character sample having a line; a discrimination module configured to discriminate a reality of the generated new character by using the discrimination model; a basic loss calculation module configured to calculate a basic loss based on the new character generated by the generation model and a discrimination result from the discrimination model; a track consistency loss calculation module configured to calculate a track consistency loss based on a track consistency between the line of the line character sample and the line of the new character; and an adjustment module configured to adjust a parameter of the generation model according to the basic loss and the track consistency loss.

According to another aspect, an apparatus for building a character library, the apparatus includes: a producing module configured to generate a style character by using an adversarial network model based on a stroke character having a writing feature and a line and a line character having a line, wherein the adversarial network model is trained according to the above-mentioned method; and a character library building module configured to build a character library based on the generated style character.

According to another aspect, an electronic device is provided, including: at least one processor; and a memory communicatively connected with the at least one processor; wherein, the memory stores an instruction executable by the at least one processor, and the instruction is executed by the at least one processor to cause the at least one processor to perform the above-mentioned method.

According to another aspect, a non-transitory computer-readable storage medium storing a computer instruction, wherein the computer instruction is configured to cause the computer to perform the above-mentioned method.

According to another aspect, a computer program product is provided, including a computer program, wherein the computer program, when executed by a processor, implements the above-mentioned method.

It should be understood that the content described in this section is not intended to identify key or important features of the embodiments of the present disclosure, nor is it intended to limit the scope of the present disclosure. Other features of the present disclosure will become readily understood from the following description.

BRIEF DESCRIPTION OF THE DRAWINGS

The drawings are used for better understanding of the present solution, and do not constitute a limitation to the present disclosure. Wherein:

FIG. 1 is a schematic diagram of an exemplary system architecture in which a method for training an adversarial network model and/or a method for building a character library may be applied according to an embodiment of the present disclosure;

FIG. 2 is a flowchart of a method for training an adversarial network model according to an embodiment of the present disclosure;

FIG. 3 is a schematic diagram of an adversarial network model according to an embodiment of the present disclosure;

FIG. 4A is a schematic diagram of a line character sample according to an embodiment of the present disclosure;

FIG. 4B is a schematic diagram of a stroke character sample according to an embodiment of the present disclosure;

FIG. 5 is a flowchart of a method for training an adversarial network model according to an embodiment of the present disclosure;

FIG. 6 is a schematic diagram of a generation model in an adversarial network model to be trained according to an embodiment of the present disclosure;

FIG. 7 is a schematic diagram of a discrimination model in an adversarial network model to be trained according to an embodiment of the present disclosure;

FIG. 8 is an effect diagram of a method for training an adversarial network model according to an embodiment of the present disclosure;

FIG. 9 is a flowchart of a method for building a character library according to an embodiment of the present disclosure;

FIG. 10 is a block diagram of an apparatus for training an adversarial network model according to an embodiment of the present disclosure;

FIG. 11 is a block diagram of an apparatus for building a character library according to an embodiment of the present disclosure;

FIG. 12 is a block diagram of an electronic device for a method for training an adversarial network model and/or a method for building a character library according to an embodiment of the present disclosure.

DETAILED DESCRIPTION OF EMBODIMENTS

Exemplary embodiments of the present disclosure are described below with reference to the drawings, which include various details of the embodiments of the present disclosure to facilitate understanding, and should be regarded as merely exemplary. Therefore, those skilled in the art should recognize that various changes and modifications of the embodiments described herein may be made without departing from the scope and spirit of the present disclosure. likewise, for clarity and conciseness, descriptions of well-known functions and structures are omitted in the following description.

Collecting, storing, using, processing, transmitting, providing, and disclosing etc. of the personal information of the user (such as user handwriting character) involved in the present disclosure comply with the provisions of relevant laws and regulations, and do not violate public order and good customs.

At present, generating a character pattern, such as a handwriting character pattern, in font designing is mainly implemented by traditional font splitting and recombining or by on deep learning.

Generating a character pattern by traditional font splitting and recombing is mainly based on disassembling of radicals and strokes of the character. Although this solution may retain a local characteristic of a writing feature of a user, an overall layout of the character is not natural enough.

Generating a character pattern by deep learning is generally based on a GAN model, in which large-scale font data of a handwriting font of a user are directly generated end-to-end by inputting a small number of font images of the user. Among the various features of the handwriting font of the user, the writing feature of the user is very important, which reflects the writing speed, setbacks, turns and other habits of the user. However, the strokes generated by generating a character pattern based on the GAN model is unstable, seriously affecting the correct generation of the writing feature. Therefore, although the generating character pattern based on deep learning may learn the layout of the strokes of the user, it is difficult to learn the characteristic of the writing feature.

Furthermore, although generating a character pattern based on deep learning is an end-to-end solution based on the GAN model, it is difficult to learn both the handwriting layout style and writing feature style of the user by using a single model. Additionally, existing GAN models usually has to be supervised by using a real handwriting character of a user. However, the user may only provide very few handwritten characters in practice, which increases the difficulty of collecting training data for the existing GAN model.

The embodiments of the present disclosure provide a method for training an adversarial network model and a method for building a character library using the training model. A stroke character sample having a writing feature and a line and a line character sample having a line are used as a training data, and a track consistency loss is introduced in the training of the adversarial network model, so that the training of the adversarial network model is constrained by a track consistency between the line of the line character sample and a line of a new character, thereby enabling the trained adversarial network model to achieve more accurate font transfer.

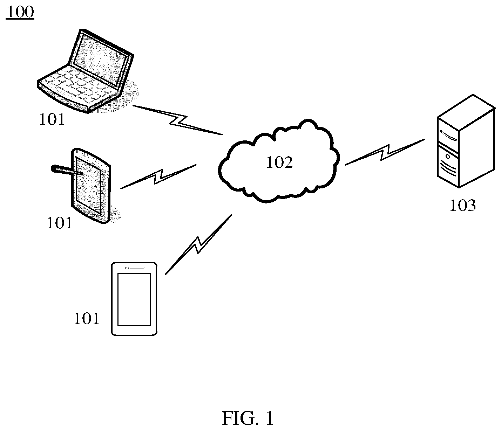

FIG. 1 is a schematic diagram of an exemplary system architecture in which a method for training an adversarial network model and/or a method for building a character library may be applied according to an embodiment of the present disclosure. It should be noted that FIG. 1 is only an example of a system architecture to which the embodiments of the present disclosure may be applied, so as to help those skilled in the art to understand the technical content of the present disclosure, but it does not mean that the embodiments of the present disclosure may not be used for other devices, systems, environments or scenes.

As shown in FIG. 1, a system architecture 100 according to this embodiment may include a plurality of terminal devices 101, a network 102 and a server 103. The network 102 is used provide a medium of a communication link between the terminal device 101 and the server 103. The network 102 may include various types of connection, such as wired and/or wireless communication links, and the like.

The user may use the terminal devices 101 to interact with the server 103 through the network 102, so as to receive or send messages and the like. The terminal devices 101 may be implemented by various electronic devices including, but not limited to, smart phones, tablet computers, laptop computers, and the like.

At least one of the method for training an adversarial network model and the method for building a character library provided by the embodiments of the present disclosure may generally be performed by the server 103. Correspondingly, at least one of an apparatus for training an adversarial network model and an apparatus for building a character library provided by the embodiments of the present disclosure may generally be set in the server 103. The method for training an adversarial network model and the method for building a character library provided by the embodiments of the present disclosure may also be performed by a server or a server cluster that is different from the server 103 and may communicate with a plurality of terminal devices 101 and/or servers 103. Correspondingly, the apparatus for training the adversarial network model and the apparatus for building the character library provided by the embodiments of the present disclosure may also be set in a server or server cluster that is different from the server 103 and may communicate with a plurality of terminal devices 101 and/or servers 103.

In the embodiments of the present disclosure, the adversarial network model may include a generation model and a discrimination model. The generation model may generate a new image based on a preset image, and the discrimination model may discriminate a difference (or similarity) between the generated image and the preset image. An output of the discrimination model may be a probability value ranging from 0 to 1. The lower the probability value, the greater the difference between the generated image and the preset image. The higher the probability value, the more similar the generated image is to the preset image. In a training process of the adversarial network model, the goal of the generation model is to generate an image that is as close to the preset image as possible, and the goal of the discrimination model is to try to distinguish the image generated by the generation model from the preset image. The generation model and the discrimination model are continuously updated and optimized during the training process. A training stop condition may be set as desired by the user, so that the adversarial network model satisfying the user's requirements may be obtained in case that the training stop condition is met.

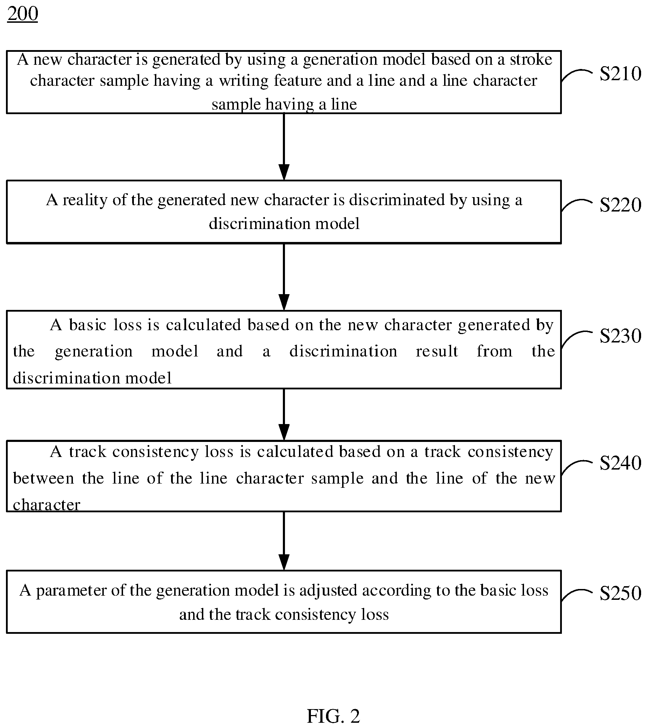

FIG. 2 is a flowchart of a method for training an adversarial network model according to an embodiment of the present disclosure. The adversarial network model may include a generation model and a discrimination model, and the method may include operations S210 to S250.

In operation S210, a new character is generated by using the generation model based on a stroke character sample having a writing feature and a line and a line character sample having a line.

Each of the line character sample and the stroke character sample may be an image of a character. For example, the line character sample may be a line track image (image A) extracted from a character image having a personal style. The character image having the personal style includes but is not limited to an image of a handwriting character of a user. The stroke character sample may be a character image (image B) having a basic font. The basic font may be, for example, a regular font such as a Chinese font of Kai or Song. In some embodiments, the number of line character samples may be different from the number of stroke character samples, for example, the number of line character samples may be less than the number of stroke character samples. For example, hundreds of line characters and tens of thousands of stroke characters may be used as training samples.

For example, the generation model may add a writing feature to the line character sample, and may add a writing feature to the stroke character sample based on the stroke character sample. Alternatively, the generation model may remove a writing feature from the line character sample, and may remove a writing feature from the stroke character sample based on the stroke character sample, which will be described in further detail below.

In operation S220, a reality of the generated new character is discriminated by using the discrimination model.

For example, the discrimination model may discriminate a reality of a new character generated by adding a writing feature to the line character sample based on the stroke character sample. Alternatively, the discrimination model may discriminate a reality of a new character generated by removing a writing feature from the stroke character sample based on the line character sample.

In operation S230, a basic loss is calculated based on the new character generated by the generation model and a discrimination result from the discrimination model.

For example, according to the embodiments of the present disclosure, the basic loss includes but is not limited to an adversarial loss, a reconstruction loss and a cyclic consistency loss, etc.

In operation S240, a track consistency loss is calculated based on a track consistency between the line of the line character sample and the line of the new character.

For example, a difference image between the line character sample and the generated new character may be calculated, and the track consistency loss of the line character sample and the generated new character may be calculated based on the difference image. The difference image may reflect a difference between the line character sample and the generated new character, so the track consistency loss of the line character sample and the generated new character may be accurately calculated based on the difference image.

In operation S250, a parameter of the generation model is adjusted according to the basic loss and the track consistency loss. Since the track consistency loss is introduced in the above loss calculation, the track consistency between the new character and the respective line character is taken into account in adjusting the parameter of the adversarial network model, thereby improving the accuracy of the trained adversarial network model.

For example, after the parameter of the generation model is adjusted, the generation model may re-obtain at least one line character and at least one stroke character, the foregoing operation is repeated to obtain a new adversarial loss and a new track consistency loss, and then the parameter of the generation model is adjusted again.

It should be noted that, in the embodiments of the present disclosure, the above operations may be performed sequentially, performed in parallel, or performed in different orders. For example, operation S240 may be performed after operation S210 and before operation S220. Alternatively, operation S240 may be performed in parallel with operation S220 or operation S230. Alternatively, operation S240 may be performed after operation S210 is partially performed. For example, operation S220 may be performed after operation S210 is partially performed.

According to the embodiments of the present disclosure, the stroke character sample having the writing feature and the line and the line character sample having the line are used as the training data, and the track consistency loss is introduced in the training of the adversarial network model, so that the training of the adversarial network model is constrained by the track consistency between the line of the line character sample and the line of the new character, thus enabling the trained adversarial network model to achieve more accurate font transfer.

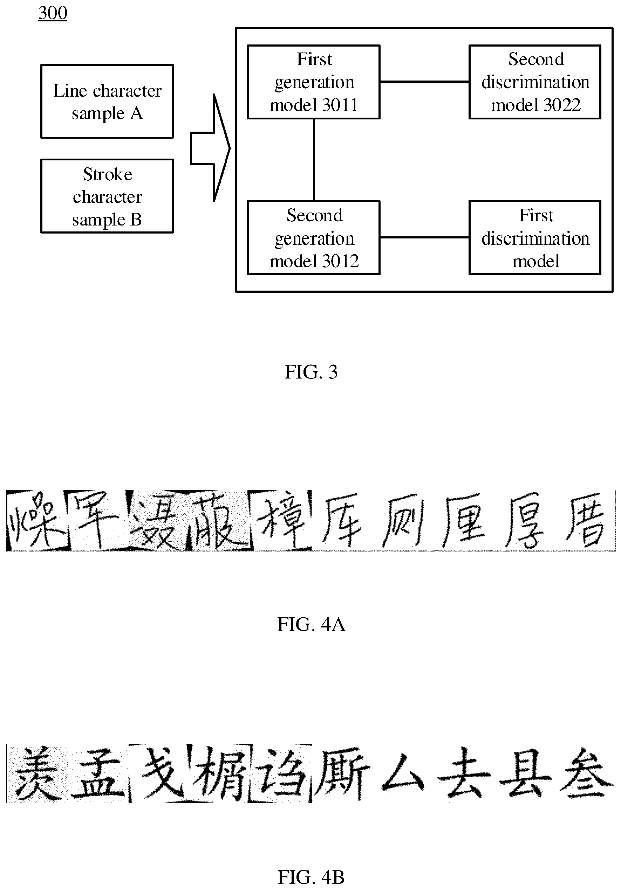

FIG. 3 is a schematic diagram of an adversarial network model according to an embodiment of the present disclosure. FIG. 3 is only an example of a model to which the embodiments of the present disclosure may be applied, so as to help those skilled in the art to understand the technical content of the present disclosure, but does not mean that the embodiments of the present disclosure may not be used in other environments or scenes.

As shown in FIG. 3, the adversarial network model includes a generation model and a discrimination model, wherein the generation model may include a first generation model 3011 and a second generation model 3012, and the discrimination model may include a first discrimination model 3021 and a second discrimination model 3022.

An input image may include an image in a first domain and an image in a second domain. The image in the first domain contains a line character having only line(s) of a character, and the image in the second domain contains a stroke character having both line(s) and a writing feature of a character. The first generation model 3011 may convert an image from the first domain to the second domain. The second generation model 3012 may convert an image from the second domain to the first domain. The first discrimination model 3021 may discriminate a reality of the image in the first domain, and the second discrimination model 3022 may discriminate a reality of the image in the second domain.

During training, the image in the first domain may be converted to the second domain by using the first generation model 3011, and the image output by the first generation model 3011 may be converted from the first domain to the first domain by using the second generation model 3012. Similarly, the image in the second domain may be converted to the first domain by using the second generation model 3012, and the image output by the second generation model 3012 may be converted from the first domain to the second domain by using the first generation model 3011. The reality of the image of the first domain output by the second generation model 3012 may be discriminated by using the first discrimination model 3021, and the reality of the image of the second domain output by the first generation model 3011 may be discriminated by using the second discrimination model 3022. A loss may be calculated according to at least one of the outputs of the first generation model 3011, the second generation model 3012, the first discrimination model 3021 and the second discrimination model 3022, and a parameter of the adversarial network model may be adjusted based on the loss.

FIG. 4A is a schematic diagram of a line character sample according to an embodiment of the present disclosure.

As shown in FIG. 4A, the line character sample may reflect a track line of a character. A thickness of each line in a line character is consistent. The line character sample does not contain a writing feature such as a variation of the thickness of the line(s) and the end shape of the line(s). For example, the line character sample is obtained by transforming a handwriting character obtained from a user, and mainly reflect a track line of the handwriting character of the user. For example, the line character sample is a binary image. For example, pixels in the line character sample have only two values, 0 and 255.

FIG. 4B is a schematic diagram of a stroke character sample according to an embodiment of the present disclosure. As shown in FIG. 4B, the stroke character sample is from a basic font library, such as a font library of Chinese font Kai, a font library of Chinese font Song, a font library of Chinese font YouYuan, and the like.

It should be understood that the fonts and contents of the characters shown in FIG. 4A and FIG. 4B are only intended to illustrate the features of the line character sample and the stroke character sample, and are not intended to limit their specific contents and font styles.

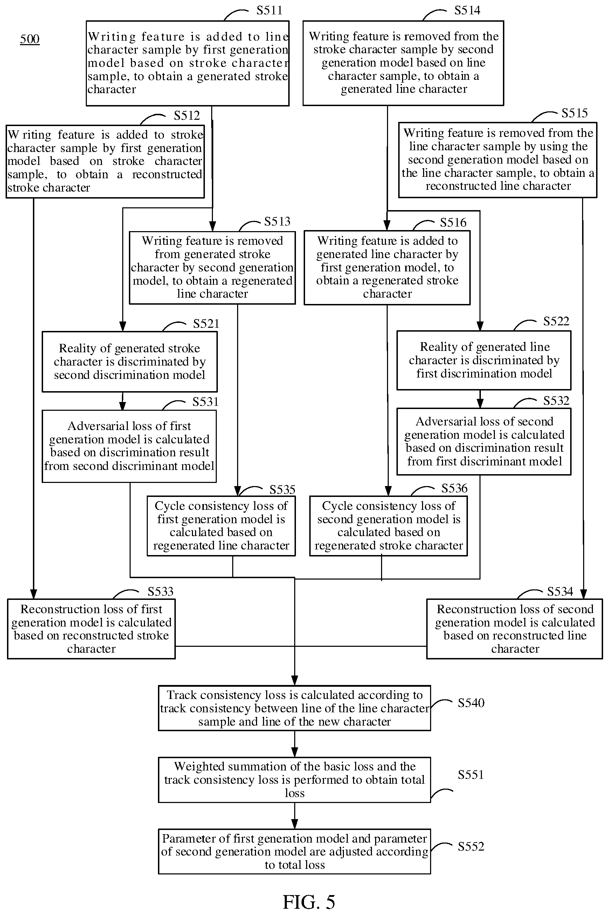

FIG. 5 is a flowchart of a method for training an adversarial network model according to an embodiment of the present disclosure. The method may be used to train the adversarial network model including a first generation model, a second generation model, a first discrimination model and a second discrimination model, such as the adversarial network model described above with reference to FIG. 3.

A new character may be generated by using the first generation model and the second generation model based on a line character sample and a stroke character sample, which will be described in detail below with reference to the following operations S511 to S516.

In operation S511, a writing feature is added to the line character sample by using the first generation model based on the stroke character sample, to obtain a generated stroke character.

For example, a writing feature may be added to a line character sample A by using the first generation model based on a stroke character sample B, to obtain a generated stroke character A2B(A).

In operation S512, a writing feature is added to the stroke character sample by using the first generation model based on the stroke character sample, to obtain a reconstructed stroke character.

For example, a writing feature may be added to the stroke character sample B by using the first generation model based on the stroke character sample B, to obtain a reconstructed stroke character A2B(B).

In operation S513, a writing feature is removed from the generated stroke character by using the second generation model, to obtain a regenerated line character.

For example, a writing feature may be removed from the generated stroke character A2B(A) by using the second generation model based on the line character sample A, to obtain a regenerated line character B2A(A2B(A)).

In operation S514, a writing feature is removed from the stroke character sample by using the second generation model based on the line character sample, to obtain a generated line character.

For example, a writing feature may be removed from the stroke character sample B by using the second generation model based on the line character sample A, to obtain a generated line character B2A(B).

In operation S515, a writing feature is removed from the line character sample by using the second generation model based on the line character sample, to obtain a reconstructed line character.

For example, a writing feature may be removed from the line character sample A by using the second generation model based on the line character sample A, to obtain a reconstructed line character B2A(A).

In operation S516, a writing feature is added to the generated line character by using the first generation model, to obtain a regenerated stroke character.

For example, a writing feature may be added to the generated line character B2A(B) by using the first generation model based on the stroke character sample B, to obtain a regenerated stroke character A2B(B2A(B)).

After the new character is generated, a reality of the generated new character may be discriminated by using the first discrimination model and the second discrimination model, which will be described in detail below with reference to the following operations S521 to S522.

In operation S521, a reality of the generated stroke character is discriminated by using the second discrimination model.

For example, a reality of the generated stroke character A2B(A) may be discriminated by using the second discrimination model, such that an output value greater than 0 and less than 1 may be obtained. The output value tending to 1 indicates that A2B(A) is more like a stroke character, and the output value tending to 0 indicates that A2B(A) is less like a stroke character.

In operation S522, a reality of the generated line character is discriminated by using the first discrimination model.

For example, a reality of the generated line character B2A(B) may be discriminated by using the first discrimination model, such that an output value greater than 0 and less than 1 may be obtained. The output value tending to 1 indicates that B2A(B) is more like a line character, and the output value tending to 0 indicates that A2B(A) is less like a line character.

After the above-mentioned various new characters and discrimination results from the first and second discrimination models are generated, a basic loss may be calculated based on the generated new character and the discrimination result, which will be described in detail below with reference to operations S531 to S536.

In operation S531, an adversarial loss of the first generation model is calculated based on the discrimination result from the second discrimination model.

For example, the adversarial loss of the first generation model may be calculated by:

$$L1\_\{adv\}= E_2[logD_2(B)]+E_1[log(1-D_2(A2B(A)))]$$

where $L1\_\{adv\}$ represents the adversarial loss of the first generation model, $E_1$ represents an expectation operator of the first discrimination model, $E_2$ represents an expectation operator of the second discrimination model, $D_2(B)$ represents a value obtained by discriminating the reality of the stroke character B by the second discrimination model, and $D_2(A2B(A))$ represents a value obtained by discriminating the reality of the generated stroke character A2B(A) by the second discrimination model.

In operation S532, an adversarial loss of the second generation model is calculated based on the discrimination result from the first discrimination model.

For example, the adversarial loss of the first generation model may be calculated by:

$$L2\_\{adv\}=E_1[logD_1(A)] +E_2[log(1-D_1(B2A(B)))]$$

where $L2\_\{adv\}$ represents the adversarial loss of the second generation model, $E_1$ represents the expectation operator of the first discrimination model, $E_2$ represents the expectation operator of the second discrimination model, $D_1(B)$ represents a value obtained by discriminating the reality of the line character A by the first discrimination model, and $D_1(B2A(B))$ represents a value obtained by discriminating the reality of the generated line character B2A(B) by the first discrimination model.

In operation S533, a reconstruction loss of the first generation model is calculated based on the reconstructed stroke character.

For example, the reconstruction loss of the first generation model may be calculated by:

$$L1\_\{rec\}=\|B-A2B(B)\|$$

where $L1\_\{rec\}$ represents the reconstruction loss of the first generation model, B represents the stroke character sample, A2B represents an operation of adding a writing feature by using the first generation model, A2B(B) represents the reconstructed stroke character, (B-A2B(B)) represents a difference image between the stroke character sample and the reconstructed stroke character, and "|| ||" represents a square root of a sum of squares of pixel values of the image. In operation S534, a reconstruction loss of the second generation model is calculated based on the reconstructed line character.

For example, the reconstruction loss of the second generation model may be calculated by:

$$L2\_\{rec\}=\|A-B2A(A)\|$$

where $L2\_\{rec\}$ represents the reconstruction loss of the second generation model, A represents the line character sample, B2A represents an operation of removing a writing feature by using the second generation model, B2A(A) represents the reconstructed line character, (A-B2A(A)) represents a difference image between the line character sample and the reconstructed line character, and "|| ||" represents a square root of a sum of squares of pixel values of the image.

In operation S535, a cycle consistency loss of the first generation model is calculated based on the regenerated line character.

For example, the cycle consistency loss of the first generation model may be calculated by:

$$L1\_\{cycle\}=\|A-B2A(A2B(A))\|$$

where L1_{cycle} represents the cycle consistency of the first generation model, A represents the line character sample, B2A represents an operation of removing a writing feature by using the second generation model, A2B(A) represents the generated stroke character, B2A(A2B(A)) represents the regenerated line character, (A-B2A(A2B(A))) represents a difference image between the line character sample and the regenerated line character, and "|| ||" represents a square root of a sum of squares of pixel values of the image. In operation S536, a cycle consistency loss of the second generation model is calculated based on the regenerated stroke character.

For example, the cycle consistency loss of the second generation model may be calculated by:

$$L2\_\{cycle\}=\|B\text{-}A2B(B2A(B))\|;$$

where L2_{cycle} represents the cycle consistency of the second generation model, B represents the stroke character sample, A2B represents an operation of adding a writing feature by using the first generation model, B2A(B) represents the generated line character, A2B(B2A(B)) represents the regenerated stroke character, (B-A2B(B2A(B))) represents a difference image between the stroke character sample and the regenerated stroke character, and "|| ||" represents a square root of a sum of squares of pixel values of the image.

After the above-mentioned various new characters are generated, a track consistency loss may be calculated according to a track consistency between the line of the line character sample and the new character, which will be described in detail below with reference to operation S540.

In operation S540, the track consistency loss may be calculated according to the track consistency between the line of the line character sample and the new character.

For example, the track consistency loss is calculated by:

$$L\_\{traj\}=\|(A\text{-}A2B(A))*A\|$$

where L_{traj} represents the track consistency loss, A represents the line character sample, A2B represents an operation of adding a writing feature by using the first generation model, A2B(A) represents the generated stroke character, (A-A2B(A)) represents a difference image between the line character sample and the generated stroke character, "*" represents multiply pixel by pixel, and "|| ||" represents a square root of a sum of squares of pixel values of the image.

For example, A is a line character "历" in Chinese, A2B(A) is the generated stroke character (the Chinese character "历" with the writing feature added). Ideally, an image of A2B(A) may completely cover an image of A, such that L_{traj} will be small enough. In this way, the calculation of track consistency loss may be implemented in a simple and effective manner without excessive calculated amount, which is helpful for efficient training of the adversarial network.

After obtaining the above-mentioned basic loss and the track consistency loss, parameters of the first generation model and the second generation model may be adjusted according to the basic loss and the track consistency loss, which will be described in detail below with reference to operations S551 to S552.

In operation S551, a weighted summation of the basic loss and the track consistency loss is performed to obtain a total loss.

For example, the total loss may be calculated by:

$$L\_\{total\}=\lambda_{adv}\cdot(L1\_\{adv\}+L2\_\{adv\})+\lambda_{rec}\cdot(L1\_\{rec\}+L2\_\{rec\})$$
$$+\lambda_{cycle}\cdot(L1\_\{cycle\}+L2\_\{cycle\})+\lambda_{traj}\cdot L\_\{traj\}$$

where L_{total} represents the total loss, L1_{adv} represents the adversarial loss of the first generation model, L2_{adv} represents the adversarial loss of the second generation model, and L_{traj} represents the track consistency loss. $\lambda_{adv}$ represents a weight of the adversarial loss, $\lambda_{rec}$ represents a weight of the reconstruction loss, $\lambda_{cycle}$ represents a weight of the cycle consistency loss, and $\lambda_{traj}$ represents a weight of the track consistency loss. In this way, the track consistency loss may be combined with the base loss, so as to calculate the total loss that more comprehensively constrains the training process.

In operation S552, the parameter of the first generation model and the parameter of the second generation model are adjusted according to the total loss.

For example, after the parameter of the first generation model and the parameter of the second generation model is adjusted, the first generation model and the second generation model re-obtain a line character (for example, a Chinese character "军") and a stroke character (for example, a Chinese character "孟"), the above operation is repeated to obtain a new basic loss and a new track consistency loss, and then the parameter of the generation model is adjusted again.

In some embodiments, the line character sample is a binary image obtained by extracting a line track from an image of a handwriting character, and the stroke character sample is a binary image of a character having a basic font. Therefore, each new character (for example, the generated stroke character, the generated line character, etc.) generated based on the line character sample and the stroke character sample in the above process is a binary image. Each pixel value of the binary image may be one of two values, for example, either 0 or 1. Compared with a color image with pixel values in a range of 0 to 255, the calculation speed may be greatly accelerated and the processing efficiency may be improved. Especially in the case where each of the line character sample and the generated stroke character is a binary image, a track consistency loss between the line character sample and the generated stroke character may be quickly and accurately calculated in step S540 by the above simple calculation formula, thereby increasing the training speed and saving the training time.

The above is an illustration of one iteration in a process of training the adversarial network. In the embodiments of the present disclosure, the method for training an adversarial network may be performed by multiple iterations. For example, after step S552 is performed, it may be determined whether the number of adjustments exceeds the preset number of iterations. If yes, the training process ends. Otherwise, the process returns to operation S511 for at least another line character sample and at least another stroke character sample.

Although the various steps are described above in a specific order, the embodiments of the present disclosure are not limited thereto. The various steps may be performed in other orders as required. For example, operation S511, operation S512, operation S514, and operation S515 may be performed in parallel, or may be performed sequentially in any order. In some embodiments, operations S533 to S534 may be performed before operations S513 and S516, performed in parallel with operations S513 and S516, or performed after operations S513 and S516. In some embodiments, operation S540 may be performed after operations S511 to 516 and before operations S521 to S522. In some embodiments, operation S540 may be performed in parallel with operations S521 to S522. In some embodiments, operation S540 may be performed before or in parallel with operations S531 to S536.

According to the embodiments of the present disclosure, the model training efficiency may be effectively improved. A writing feature may be added to a handwriting font of a user in higher accuracy by using the trained first generation model in order to generate a font having a customized style, thereby improving the user experience.

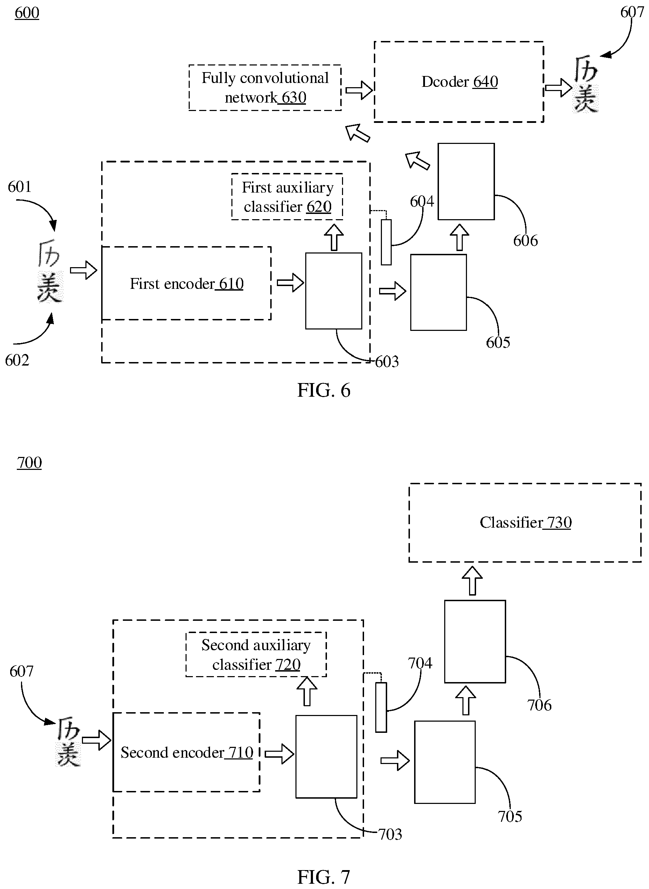

FIG. 6 is a schematic diagram of a generation model of an adversarial network model according to an embodiment of the present disclosure. At least one of the first generation model and the second generation model in any of the foregoing embodiments may adopt the structure shown in FIG. 6. The generation model shown in FIG. 6 is described below by taking an operation performed by the first generation model in a training process as an example. The working principle of the second generation model is the same as that of the first generation model, and will not be repeated here.

As shown in FIG. 6, the generation model 600 includes a first encoder 610, a first auxiliary classifier 620, a fully convolutional network 630 and a decoder 640.

During the training process, the first encoder 610 takes an image composited from a line character sample 601 and a stroke character sample 602 as an input. The first encoder 610 includes two down-sampling layers and four cross-layer connection blocks. After the first encoder 610 performs convolution and cross-layer connection operations on the image composited from the line character sample 601 and the stroke character sample 602, a first feature image 603 having n channels is output. Maximum pooling processing and average pooling processing may be performed on the first feature image 603, so as to extract 2n dimension features from the first feature image 603.

The first auxiliary classifier 620 takes the first feature image 603 from which 2n dimension features are extracted as an input, determines that the source of the input image is a line character sample or a stroke character sample, and outputs a first weight vector 604. The first weight vector 604 may be vector-multiplied by 2n channel feature vectors of each pixel in the first feature image 603, so as to obtain the first attention heatmap 605. The first attention heatmap 605 may be multiplied by the first feature image 603, so as to obtain a weighted first feature image 606.

The fully convolutional network 630 processes the weighted first feature image 606 and outputs two vectors beta and gamma.

The decoder 640 includes an ARB (Adaptive Residual Block) based on AdaLIN (Adaptive Layer-Instance Normalization) and an up-sampling layer, wherein the ARB is used for feature modulation of beta and gamma. The decoder 640 may take the weighted first feature image 606 as an input and output a transformed image 607.

FIG. 7 is a structure schematic diagram of a discrimination model of an adversarial network model according to an embodiment of the present disclosure. At least one of the first discrimination model and the second discrimination model in any of the foregoing embodiments may adopt the structure shown in FIG. 7. The discrimination model shown in FIG. 7 is described below by taking an operation performed by the first discrimination model in a training process as an example. The working principle of the second discrimination model is the same as that of the first discrimination model, and will not be repeated here.

As shown in FIG. 7, the discrimination model 700 includes a second encoder 710, a second auxiliary classifier 720 and a classifier 730.

The second encoder 710 takes the transformed image 607 as an input and outputs a second feature image 703 having n channels.

The second auxiliary classifier 720 takes the second feature image 703 as an input, determines that the source of the input image is a line character sample or a stroke character sample, and outputs a second weight vector 704. The second weight vector 704 may be vector-multiplied with a channel feature vector of each pixel on the second feature image 703, so as to obtain a second attention heatmap 705. The second attention heatmap 705 is multiplied by the second feature image 703, so as to obtain a weighted second feature image 706.

The classifier 730 may take the weighted second feature image 706 as an input, perform convolution on the weighted second feature image 706 and then classify it, and output a value representing a reality.

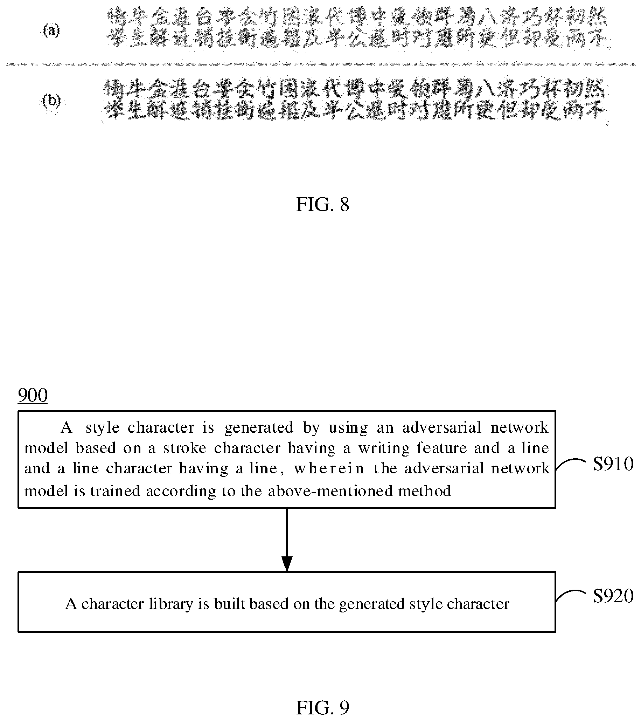

FIG. 8 is an effect diagram of a method for training an adversarial network model according to an embodiment of the present disclosure.

As shown in FIG. 8, for the adversarial network model trained by the method of any of the above embodiments, part (a) represents images of a plurality of line character samples without writing feature, which are input to the generation model of the adversarial network model; part (b) represents images of a plurality of generated stroke characters with writing feature, which are input to the generation model of the adversarial network model. It may be seen from FIG. 8 that contents of the line characters in the images in part (a) are consistent with the contents of the generated stroke characters in the images in part (b), and the line tracks of the line characters in part (a) are substantially consistent with the line tracks of the generated stroke characters in part (b). In view of this, the model trained by the method for training an adversarial network model may achieve more accurate font transfer.

FIG. 9 is a flowchart of a method for building a character library according to an embodiment of the present disclosure.

As shown in FIG. 9, the method 900 for building the character library may include operations S910 to S920.

In operation S910, a style character is generated by using an adversarial network model based on a stroke character having a writing feature and a line and a line character having a line.

The adversarial network model is trained according to the method for training an adversarial network model.

For example, the adversarial network model adds a writing feature to a line character (having a line) based on the stroke character (having a writing feature and a line), so as to generate a style character. The style character has the same line as the line character, and has the same writing feature as the stroke character.

In operation S920, a character library is built based on the generated style character.

By using the adversarial network model to generate the style character based on the line character having a personal style of a user, a character library with the personal style font of the user may be built. In some embodiments, the character library may be applied to an input method, so that the input method may provide the user with characters having the user-customized style font, which improves the user experience.

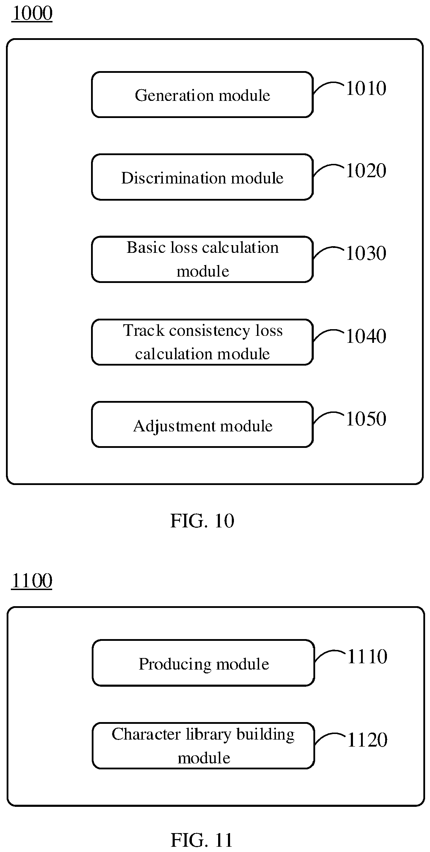

FIG. 10 is a block diagram of an apparatus for training an adversarial network according to an embodiment of the present disclosure.

As shown in FIG. 10, the apparatus 1000 for training the adversarial network model is used for training an adversarial network. The adversarial network model includes a generation model and a discrimination model. The apparatus includes a generation module 1010, a discrimination module 1020, a basic loss calculation module 1030, a track consistency loss calculation module 1040 and an adjustment module 1050.

The generation module 1010 is used to generate a new character by using the generation model based on a stroke character sample having a writing feature and a line and a line character sample having a line.

The discrimination module 1020 is used to discriminate a reality of the generated new character by using the discrimination model.

The basic loss calculation module 1030 is used to calculate a basic loss based on the new character generated by the generation model and a discrimination result from the discrimination model.

The track consistency loss calculation module 1040 is used to calculate a track consistency loss based on a track consistency between the line of the line character sample and the line of the new character.

The adjustment module 1050 is used to adjust a parameter of the generation model according to the basic loss and the track consistency loss.

In an embodiment of the present disclosure, each of the line character sample and the new character as described above is an image of a character, and the track consistency loss calculation module includes: a difference image calculation unit used to calculate a difference image between the line character sample and a generated stroke character; and a track consistency loss calculation unit used to calculate the track consistency loss based on the difference image.

In an embodiment of the present disclosure, the generation model includes a first generation model and a second generation model, and the generation module includes: a first generation unit used to add a writing feature to the line character sample by using the first generation model based on the stroke character sample, to obtain a generated stroke character; a second generation unit used to add a writing feature to the stroke character sample by using the first generation model based on the stroke character sample, to obtain a reconstructed stroke character; a third generation unit used to remove a writing feature from the generated stroke character by using the second generation model, to obtain a regenerated line character; a fourth generation unit used to remove a writing feature from the stroke character sample by using the second generation model based on the line character sample, to obtain a generated line character; a fifth generation unit used to remove a writing feature from the line character sample by using the second generation model based on the line character sample, to obtain a reconstructed line character; and a sixth generation unit used to add a writing feature to the generated line character by using the first generation model, to obtain a regenerated stroke character.

In embodiment of the present disclosure, the track consistency loss calculation module calculates the track consistency loss by:

$$L\_\{traj\} = \|(A - A2B(A)) * A\|$$

where L_{traj} represents the track consistency loss, A represents the line character sample, A2B represents an operation of adding a writing feature by using the first generation model, A2B(A) represents the generated stroke character, (A-A2B(A)) represents the difference image between the line character sample and the generated stroke character, "*" represents multiply pixel by pixel, and "|| ||" represents a square root of a sum of squares of pixel values of the image.

In an embodiment of the present disclosure, the discrimination model includes a first discrimination model and a second discrimination model, and the discrimination module includes: a first discrimination unit used to discriminate a reality of the generated stroke character by using the second discrimination model; and a second discrimination unit used to discriminate a reality of the generated line character by using the first discrimination model.

In an embodiment of the present disclosure, the basic loss includes an adversarial loss, a reconstruction loss, and a cyclic consistency loss of each of the first generation model and the second generation model, and the basic loss calculation module includes: an adversarial loss calculation unit used to calculate the adversarial loss of the first generation model based on a discrimination result from the second discrimination model, and calculate the adversarial loss of the second generation model based on a discrimination result from the first discrimination model; a reconstruction loss calculation unit used to calculate the reconstruction loss of the first generation model based on the reconstructed stroke character, and calculate the reconstruction loss of the second generation model based on the reconstructed line character; and a cyclic consistent loss calculation unit used to calculate the cycle consistency loss of the first generation model based on the regenerated line character, and calculate the cycle consistency loss of the second generation model based on the regenerated stroke character.

In an embodiment of the present disclosure, the adjustment module includes: a total loss calculation unit used to perform a weighted summation of the basic loss and the track consistent loss, to obtain a total loss; and an adjustment unit used to adjust a parameter of the first generation model and a parameter of the second generation model according to the total loss.

In an embodiment of the present disclosure, the line character sample is a binary image obtained by extracting a line track from an image of a handwriting character, and the stroke character sample is a binary image of a character having a basic font.

FIG. 11 is a block diagram of an apparatus for building a character library according to an embodiment of the present disclosure;

As shown in FIG. 11, the apparatus 1100 for building the character library is used for establishing a character library, and the apparatus may include a producing module 1110 and a character library building module 1120.

The producing module 1110 is used to generate a style character by using an adversarial network model based on a stroke character having a writing feature and a line and a line character having a line, wherein the adversarial network model is trained according to the above-mentioned method.

The character library building module 1120 is used to build a character library based on the generated style character.

It should be understood that the embodiments of the apparatus part of the present disclosure are the same or similar to the respective embodiments of the method part of the present disclosure, and the technical problems solved and the technical effects achieved are also the same or similar, which are not repeated in the present disclosure.

According to the embodiments of the present disclosure, the present disclosure also provides an electronic device, a readable storage medium and a computer program product.

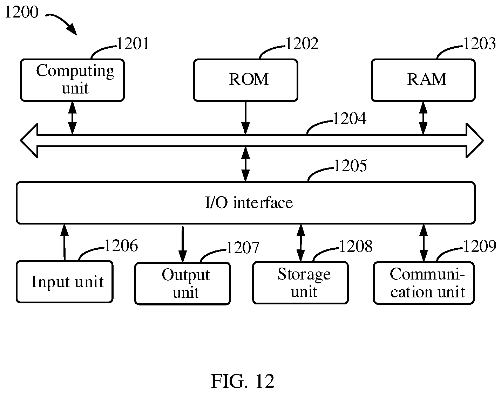

FIG. 12 is a block diagram of an electronic device for a method for training an adversarial network model and/or a method for building a character library according to an embodiment of the present disclosure. The electronic device is intended to represent various forms of digital computers, such as laptop computers, desktop computers, workstations, personal digital assistants, servers, blade servers, mainframe computers and other suitable computers. The electronic device may also represent various forms of mobile devices, such as personal digital processing, cellular phones, smart phones, wearable devices and other similar computing devices. The components shown herein, their connections and relationships, and their functions are merely examples, and are not intended to limit the implementation of the present disclosure described and/or required herein.

As shown in FIG. 12, the device 1200 includes a computing unit 1201, which may execute various appropriate actions and processing according to a computer program stored in a read only memory (ROM) 1202 or a computer program loaded from a storage unit 1208 into a random access memory (RAM) 1203. Various programs and data required for the operation of the device 1200 may also be stored in the RAM 1203. The computing unit 1201, the ROM 1202 and the RAM 1203 are connected to each other through a bus 1204. An input/output (I/O) interface 1205 is also connected to the bus 1204.

The I/O interface 1205 is connected to a plurality of components of the device 1200, including: an input unit 1206, such as a keyboard, a mouse, etc.; an output unit 1207, such as various types of displays, speakers, etc.; a storage unit 1208, such as a magnetic disk, an optical disk, etc.; and a communication unit 1209, such as a network card, a modem, a wireless communication transceiver, etc. The communication unit 1209 allows the device 1200 to exchange information/data with other devices through the computer network such as the Internet and/or various telecommunication networks.

The computing unit 1201 may be various general-purpose and/or special-purpose processing components with processing and computing capabilities. Some examples of computing unit 1201 include, but are not limited to, central processing unit (CPU), graphics processing unit (GPU), various dedicated artificial intelligence (AI) computing chips, various computing units that run machine learning model algorithms, digital signal processing DSP and any appropriate processor, controller, microcontroller, etc. The computing unit 1201 executes the various methods and processes described above, such as the method for training an adversarial network model. For example, in some embodiments, the method for training an adversarial network model may be implemented as computer software programs, which are tangibly contained in the machine-readable medium, such as the storage unit 1208. In some embodiments, part or all of the computer program may be loaded and/or installed on the device 1200 via the ROM 1202 and/or the communication unit 1209. When the computer program is loaded into the RAM 1203 and executed by the computing unit 1201, one or more steps of the method for for training an adversarial network model described above may be executed. Alternatively, in other embodiments, the computing unit 1201 may be configured to execute the method for training an adversarial network model in any other suitable manner (for example, by means of firmware).

Various implementations of the systems and technologies described in the present disclosure may be implemented in digital electronic circuit systems, integrated circuit systems, field programmable gate arrays (FPGA), application specific integrated circuits (ASIC), application-specific standard products (ASSP), system-on-chip SOC, complex programmable logic device (CPLD), computer hardware, firmware, software and/or their combination. The various implementations may include: being implemented in one or more computer programs, the one or more computer programs may be executed and/or interpreted on a programmable system including at least one programmable processor, the programmable processor may be a dedicated or general programmable processor. The programmable processor may receive data and instructions from a storage system, at least one input device and at least one output device, and the programmable processor transmit data and instructions to the storage system, the at least one input device and the at least one output device.

The program code used to implement the method of the present disclosure may be written in any combination of one or more programming languages. The program codes may be provided to the processors or controllers of general-purpose computers, special-purpose computers or other programmable data processing devices, so that the program code enables the functions/operations specific in the flowcharts and/or block diagrams to be implemented when the program code executed by a processor or controller. The program code may be executed entirely on the machine, partly executed on the machine, partly executed on the machine and partly executed on the remote machine as an independent software package, or entirely executed on the remote machine or server.

In the context of the present disclosure, the machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, device, or device, or any suitable combination of the above-mentioned content. More specific examples of the machine-readable storage media would include electrical connections based on one or more wires, portable computer disks, hard disks, random access memory (RAM), read-only memory (ROM), erasable programmable read-only memory (EPROM or flash memory), optical fiber, portable compact disk read-only memory (CD-ROM), optical storage device, magnetic storage device or any suitable combination of the above-mentioned content.

In order to provide interaction with users, the systems and techniques described here may be implemented on a computer, the computer includes: a display device (for example, a CRT (cathode ray tube) or LCD (liquid crystal display) monitor) for displaying information to the user; and a keyboard and a pointing device (for example, a mouse or trackball). The user may provide input to the computer through the keyboard and the pointing device. Other types of devices may also be used to provide interaction with users. For example, the feedback provided to the user may be any form of sensory feedback (for example, visual feedback, auditory feedback or tactile feedback); and any form (including sound input, voice input, or tactile input) may be used to receive input from the user.

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or in a computing system including any combination of such back-end components, middleware components or front-end components. The components of the system may be connected to each other through any form or medium of digital data communication (for example, a communication network). Examples of communication networks include: local area network (LAN), wide area network (WAN) and the Internet.

The computer system may include a client and a server. The client and the server are generally far away from each other and usually interact through the communication network. The relationship between the client and the server is generated by computer programs that run on the respective computers and have a client-server relationship with each other. The server may be a cloud server, a server of a distributed system, or a server combined with a blockchain.

It should be understood that the various forms of processes shown above may be used to reorder, add or delete steps. For example, the steps described in the present disclosure may be executed in parallel, sequentially or in a different order, as long as the desired result of the technical solution disclosed in the present disclosure may be achieved, which is not limited herein.

The above-mentioned implementations do not constitute a limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method (200) for training an adversarial network model, the adversarial network model comprising a generation model and a discrimination model, and the method comprising:

   generating (S210) a new character by using the generation model based on a stroke character sample having a writing feature and a line and a line character sample having a line;
   discriminating (S220) a reality of the generated new character by using the discrimination model;
   calculating (S230) a basic loss based on the new character generated by the generation model and a discrimination result from the discrimination model;
   calculating (S240) a track consistency loss based on a track consistency between the line of the line character sample and the line of the new character; and
   adjusting (S250) a parameter of the generation model according to the basic loss and the track consistency loss.

2. The method according to claim 1, wherein each of the line character sample and the new character is an image of a character, and the calculating the track consistency loss comprises:

   calculating a difference image between the line character sample and a generated stroke character; and
   calculating the track consistency loss based on the difference image.

3. The method according to claim 1 or 2, wherein the generation model comprises a first generation model (3011) and a second generation model (3012), and the generating a new character by using the generation model based on a stroke character sample and a line character sample comprises:

adding (S511) a writing feature to the line character sample by using the first generation model based on the stroke character sample, to obtain a generated stroke character;

adding (S512) a writing feature to the stroke character sample by using the first generation model based on the stroke character sample, to obtain a reconstructed stroke character;

removing (S513) a writing feature from the generated stroke character by using the second generation model, to obtain a regenerated line character;

removing (S514) a writing feature from the stroke character sample by using the second generation model based on the line character sample, to obtain a generated line character;

removing (S515) a writing feature from the line character sample by using the second generation model based on the line character sample, to obtain a reconstructed line character; and

adding (S516) a writing feature to the generated line character by using the first generation model, to obtain a regenerated stroke character.

4. The method according to claim 3, wherein the track consistency loss is calculated by:

$$L\_\{traj\}=\|(A-A2B(A))*A\|$$

wherein L_{traj} represents the track consistency loss, A represents the line character sample, A2B represents an operation of adding a writing feature by using the first generation model, A2B(A) represents the generated stroke character, (A-A2B(A)) represents the difference image between the line character sample and the generated stroke character, "*" represents multiply pixel by pixel, and "|| ||" represents a square root of a sum of squares of pixel values of the image.

5. The method according to claim 3, wherein the discrimination model comprises a first discrimination model (3021) and a second discrimination model (3022), and the discriminating a reality of the generated new character by the using the discrimination model comprises:

discriminating (S521) a reality of the generated stroke character by using the second discrimination model; and
discriminating (S522) a reality of the generated line character by using the first discrimination model.

6. The method according to claim 5, wherein the basic loss comprises an adversarial loss, a reconstruction loss, and a cyclic consistency loss of each of the first generation model and the second generation model, and the calculating a basic loss based on the new character generated by the generation model and a discrimination result from the discrimination model comprises:

calculating (S531) the adversarial loss of the first generation model based on a discrimination result from the second discrimination model, and calculating (S532) the adversarial loss of the second generation model based on a discrimination result from the first discrimination model;

calculating (S533) the reconstruction loss of the first generation model based on the reconstructed stroke character, and calculating (S534) the reconstruction loss of the second generation model based on the reconstructed line character; and

calculating (S535) the cycle consistency loss of the first generation model based on the regenerated line character, and calculating (S536) the cycle consistency loss of the second generation model based on the regenerated stroke character.

7. The method according to any one of claims 4 to 6, wherein the adjusting a parameter of the generation model according to the basic loss and the track consistency loss comprises:

performing (S551) a weighted summation of the basic loss and the track consistency loss, to obtain a total loss; and

adjusting (S552) a parameter of the first generation model and a parameter of the second generation model according to the total loss.

8. The method according to any one of claims 1 to 7, wherein the line character sample is a binary image obtained by extracting a line track from an image of a handwriting character, and the stroke character sample is a binary image of a character having a basic font.

9.  A method (900) for building a character library, comprising:

    generating (S910) a style character by using an adversarial network model based on a stroke character having a writing feature and a line and a line character having a line, wherein the adversarial network model is trained according to the method according to any one of claims 1 to 8; and
    building (S920) a character library based on the generated style character.

10. An apparatus (1000) for training an adversarial network model, the adversarial network model comprising a generation model and a discrimination model, and the apparatus comprising:

    a generation module (1010) configured to generate a new character by using the generation model based on a stroke character sample having a writing feature and a line and a line character sample having a line;
    a discrimination module (1020) configured to discriminate a reality of the generated new character by using the discrimination model;
    a basic loss calculation module (1030) configured to calculate a basic loss based on the new character generated by the generation model and a discrimination result from the discrimination model;
    a track consistency loss calculation module (1040) configured to calculate a track consistency loss based on a track consistency between the line of the line character sample and the line of the new character; and
    an adjustment module (1050) configured to adjust a parameter of the generation model according to the basic loss and the track consistency loss.

11. The apparatus according to claim 10, wherein each of the line character sample and the new character is an image of a character, and the track consistency loss calculation module comprises:

    a difference image calculation unit configured to calculate a difference image between the line character sample and a generated stroke character; and
    a track consistency loss calculation unit configured to calculate the track consistency loss based on the difference image.

12. An apparatus (1100) for building a character library, comprising:

    a producing module (1110) configured to generate a style character by using an adversarial network model based on a stroke character having a writing feature and a line and a line character having a line, wherein the adversarial network model is trained according to the apparatus according to claim 10 or 11; and
    a character library building module (1120) configured to build a character library based on the generated style character.

13. An electronic device (1200), comprising:

    at least one processor (1201); and
    a memory (1208) communicatively connected with the at least one processor (1201); wherein,
    the memory (1208) stores an instruction executable by the at least one processor (1201), and the instruction is executed by the at least one processor (1201) to cause the at least one processor (1201) to perform the method of any one of claims 1 to 9.

14. A non-transitory computer-readable storage medium storing a computer instruction, wherein the computer instruction is configured to cause the computer to perform the method of any one of claims 1 to 9.

15. A computer program product, comprising a computer program, wherein the computer program, when executed by a processor, implements the method of any one of claims 1 to 9.

100

101

101

102

103

101

FIG. 1

200

A new character is generated by using a generation model based on a stroke character sample having a writing feature and a line and a line character sample having a line ⟶ S210

A reality of the generated new character is discriminated by using a discrimination model ⟶ S220

A basic loss is calculated based on the new character generated by the generation model and a discrimination result from the discrimination model ⟶ S230

A track consistency loss is calculated based on a track consistency between the line of the line character sample and the line of the new character ⟶ S240

A parameter of the generation model is adjusted according to the basic loss and the track consistency loss ⟶ S250

FIG. 2

300

```
Line character
sample A

Stroke
character
sample B
```

```
First
generation
model 3011

Second
discrimination
model 3022

Second
generation
model 3012

First
discrimination
model
```

FIG. 3

FIG. 4A

FIG. 4B

500

S511
Writing feature is added to line character sample by first generation model based on stroke character sample, to obtain a generated stroke character

S514
Writing feature is removed from the stroke character sample by second generation model based on line character sample, to obtain a generated line character

S512
Writing feature is added to stroke character sample by first generation model based on stroke character sample, to obtain a reconstructed stroke character

S515
Writing feature is removed from the line character sample by using the second generation model based on the line character sample, to obtain a reconstructed line character

S513
Writing feature is removed from generated stroke character by second generation model, to obtain a regenerated line character

S516
Writing feature is added to generated line character by first generation model, to obtain a regenerated stroke character

S521
Reality of generated stroke character is discriminated by second discrimination model

S522
Reality of generated line character is discriminated by first discrimination model

S531
Adversarial loss of first generation model is calculated based on discrimination result from second discriminant model

S532
Adversarial loss of second generation model is calculated based on discrimination result from first discriminant model

S535
Cycle consistency loss of first generation model is calculated based on regenerated line character

S536
Cycle consistency loss of second generation model is calculated based on regenerated stroke character

S533
Reconstruction loss of first generation model is calculated based on reconstructed stroke character

S534
Reconstruction loss of second generation model is calculated based on reconstructed line character

S540
Track consistency loss is calculated according to track consistency between line of the line character sample and line of the new character

S551
Weighted summation of the basic loss and the track consistency loss is performed to obtain total loss

S552
Parameter of first generation model and parameter of second generation model are adjusted according to total loss

FIG. 5

600

607

Fully convolutional
network 630

Dcoder 640

历
羡

606

First auxiliary
classifier 620

604

601

历
羡

First encoder 610

605

602

603

FIG. 6

700

Classifier 730

Second auxiliary
classifier 720

704

607

706

历
羡

Second encoder 710

705

703

FIG. 7

(a) 情牛金進台要会竹因滚代博中受领群薄八济巧杯初然
举生解连销挂街遍船及半公遮时对麾所更但却受两不

(b) 情牛金進台要会竹因滚代博中受领群薄八济巧杯初然
举生解连销挂街遍船及半公遮时对麾所更但却受两不

FIG. 8

900

| A style character is generated by using an adversarial network model based on a stroke character having a writing feature and a line and a line character having a line, wherein the adversarial network model is trained according to the above-mentioned method | S910 |

| A character library is built based on the generated style character | S920 |

FIG. 9

<u>1000</u>

| |
|---|
| Generation module ⌐1010 |
| Discrimination module ⌐1020 |
| Basic loss calculation module ⌐1030 |
| Track consistency loss calculation module ⌐1040 |
| Adjustment module ⌐1050 |

FIG. 10

<u>1100</u>

| |
|---|
| Producing module ⌐1110 |
| Character library building module ⌐1120 |

FIG. 11

FIG. 12